# EUROPEAN PATENT APPLICATION

(11) **EP 1 002 769 A1**
(43) Date of publication of application: **24.05.2000**
(21) Application number: 99122087.2
(22) Date of filing: 18.11.1999
(51) Int. Cl.: C03B 5/225, F27D 3/14

(54) **Conduit structure for apparatus used for degassing molten glass under reduced pressure**

(30) Priority: 20.11.1998 JP 33079398
(71) Applicant: ASAHI GLASS COMPANY LTD., Tokyo 100-8405 (JP)
(72) Inventor: Hosoda, Yutaka, c/o Asahi Glass Co., Ltd., Tokyo 100-8305 (JP); Takei, Yusuke, c/o Asahi Glass Co., Ltd., Tokyo 100-8305 (JP)
(74) Representative: Müller-Boré & Partner Patentanwälte

(57) **Abstract**

A conduit structure for molten glass durable to a thermal expansion which is formed by combining a plurality of bricks (30), each having a substantially sectorial shape or a wedge-like shape, in a circumferential direction to thereby form a conduit for passing molten glass in a vacuum degassing apparatus, e.g. the conduit forms part of the uprising and/or downfalling pipe attached to the vacuum degassing vessel.

## Description

The present invention relates to a conduit structure for molten glass and a vacuum degassing apparatus for molten glass. In particular, the present invention relates to a conduit structure for molten glass applicable to a vacuum degassing apparatus for removing bubbles in molten glass and a vacuum degassing apparatus for molten glass.

A vacuum degassing apparatus for molten glass is an apparatus used for a system wherein molten glass in a melting vessel is degassed to be supplied continuously to a subsequent shaping step. An example of the vacuum degassing apparatus in which a vacuum degassing vessel called a siphon type is used, is disclosed in JP-A-3-33020.

The above-mentioned vacuum degassing apparatus is composed mainly of a melting vessel, an uprising pipe (conduit), a vacuum degassing vessel, a downfalling pipe (conduit) and a storage tank. Molten glass before being degassed is stored in the melting vessel, and is introduced according to a principle of siphoning through the uprising pipe into the vacuum degassing vessel in which the molten glass is degassed. Further, degassed molten glass is introduced into the storage tank through the downfalling pipe, and then, it is introduced to a shaping step. Thus, the molten glass is passed in the vacuum degassing apparatus.

For the uprising pipe and the downfalling pipe used in such vacuum degassing apparatus, a heat-insulating metal such as platinum is used since they are heated to about 1,200-1,400°C by the molten glass. Further, a heat-insulating material surrounds the periphery of the uprising pipe and the downfalling pipe to thereby prevent the radiation of heat from the pipes.

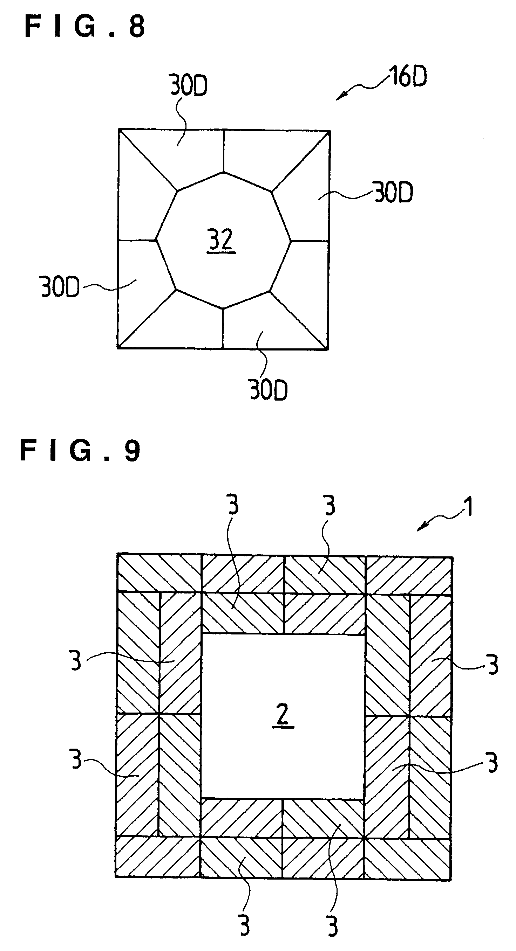

On the other hand, in a recent vacuum degassing apparatus, an attempt is made to constitute the uprising pipe and the downfalling pipe with bricks in order to reduce manufacturing costs for the uprising pipe and the downfalling pipe. Figure 9 is a cross-sectional view of a conventional uprising pipe (a downfalling pipe has the same structure) constituted with a plurality of bricks.

An uprising pipe 1 shown in Figure 9 is formed by combining a plurality of plate-like bricks 3, 3 ··· so as to surround a molten glass passage 2. For such bricks, refractory bricks such as electrocast bricks, bonded bricks or the like are used.

However, in the conventional conduit structure formed by combining the plate-like bricks 3, 3 ···, balance in the conduit structure is apt to lose because every brick 3 has a different thermal expansion, in particular, when temperature is to be raised for the initiation of operations. Accordingly, there was a disadvantage that gaps are produced at joint portions to thereby cause leakage of molten glass from the joint portions.

It is an object of the present invention to provide a conduit structure for molten glass, made of bricks, wherein there is little looseness in shape of the conduit structure due to thermal expansion, and a vacuum degassing apparatus for molten glass, using such conduit structure.

In accordance with the present invention, there is provided a conduit structure for molten glass for passing molten glass of high temperature, the conduit structure for molten glass being characterized in that a conduit is formed by combining in a circumferential direction a plurality of bricks each having a substantially sectorial shape or a wedge-like shape in cross section, wherein the cross-sectional shape of the conduit is formed of a plurality of radially divided sections of bricks.

In drawings:
Figure 1 is a perspective view showing a vacuum degassing apparatus in which the conduit structure according to the present invention is used;
Figure 2 is a cross-sectional view of the vacuum degassing apparatus shown in Figure 1;
Figure 3 is an enlarged cross-sectional view showing an uprising pipe according to a first embodiment;
Figure 4 is a transversal cross-sectional view of the uprising pipe shown in Figure 3;
Figure 5 is a transversal cross-sectional view of the uprising pipe according to a second embodiment;
Figure 6 is a transversal cross-sectional view showing the uprising pipe according to a third embodiment;
Figure 7 is a transversal cross-sectional view showing the uprising pipe according to a fourth embodiment;
Figure 8 is a transversal cross-sectional view showing the uprising pipe according to a fifth embodiment; and
Figure 9 is a transversal cross-sectional view of a conventional uprising pipe.

Preferred embodiments of the conduit structure for molten glass according to the present invention will be described with reference to the drawings.

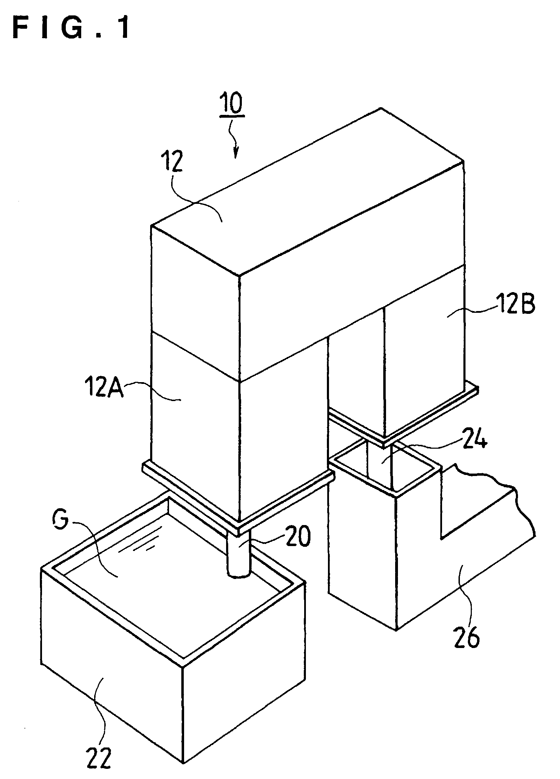

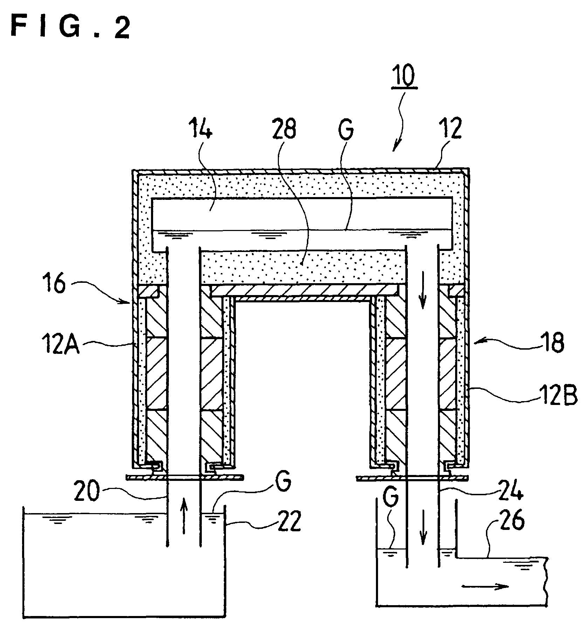

Figure 1 is a perspective view of a vacuum degassing apparatus for molten glass to which the conduit structure according to an embodiment of the present invention is applied, and Figure 2 is a cross-sectional view of the vacuum degassing apparatus shown in Figure 1.

In Figure 2, a vacuum degassing apparatus 10 is provided with a vacuum housing 12 which is formed to have a gate-like shape. In Figure 2, a vacuum degassing vessel 14 is provided in the vacuum housing 12. An uprising pipe 16 (conduit) is communicated with a left side portion of the vacuum degassing vessel 14, and a downfalling pipe 18 (conduit) is communicated with a right side portion of the vacuum degassing vessel 14. The uprising pipe 16 and the downfalling pipe 18 are respectively disposed in leg portions 12A, 12B of the vacuum housing 12 to be hermetically sealed. The construction of each of the uprising pipe 16 and the downfalling pipe 18 is described hereinafter.

An upstream guide pipe 20 is connected to a lower end portion of the uprising pipe 16, and a lower end portion of the upstream guide pipe 20 is immersed in molten glass G stored in a melting vessel 22. Further, a downstream guide pipe 24 is connected to a lower end portion of the downfalling pipe 18, and a lower end portion of the downstream guide pipe 24 is immersed in molten glass G in a storage tank 26.

The vacuum degassing vessel 14 is constituted by combining a plurality of bricks 28. In the same manner as the vacuum degassing vessel, the uprising pipe 16 and the downfalling pipe 18 are constituted by combining a plurality of bricks 30, 30 ···.

The construction of the uprising pipe 16 and the downfalling pipe 18 will be described. In this embodiment, since the structure of the uprising pipe 16 is the same as that of the downfalling pipe 18, the structure of only the uprising pipe 16 is explained, and explanation on the downfalling pipe 18 is omitted.

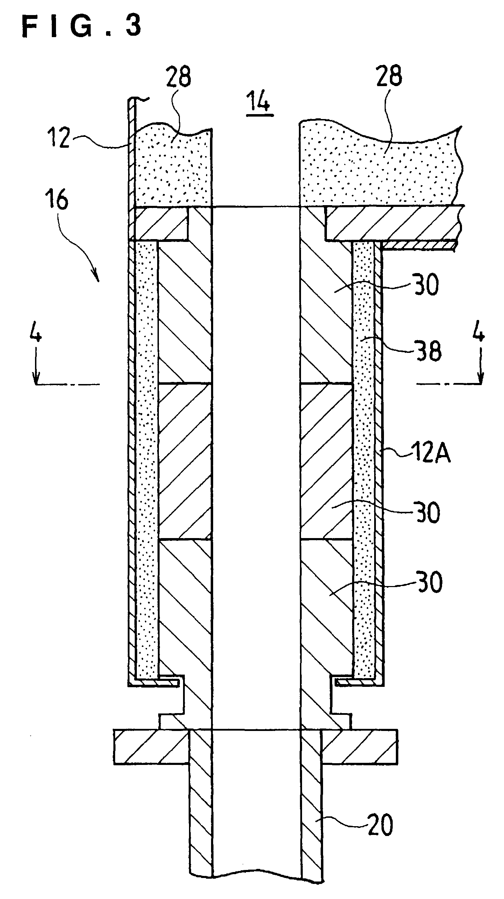

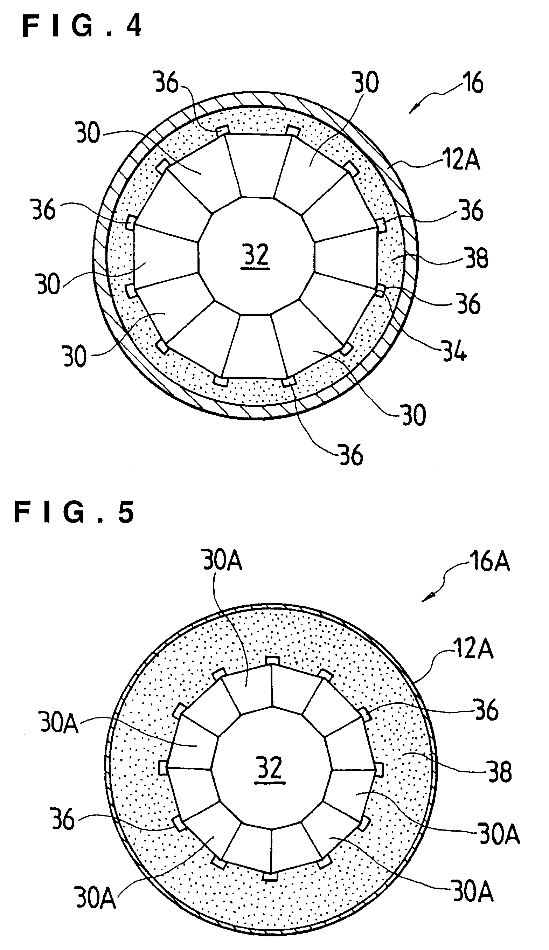

Figure 3 is a vertical cross-sectional view of the uprising pipe 16, and Figure 4 is a transversal cross-sectional view of the uprising pipe 16 viewed from a line 4-4 in Figure 3.

The uprising pipe 16 is formed by stacking three bricks 30 in a vertical direction as shown in Figure 3, and by arranging 12 bricks 30 in a circumferential direction as shown in Figure 4. However, the number of bricks 30 is not limited to this embodiment.

As shown in Figure 3, each of the bricks 30 has a substantially wedge-like shape in cross section, and they are combined in a close contact state in a circumferential direction. Accordingly, the uprising pipe 16 is formed to have a transversal cross-sectional shape which is divided in a radial direction by a plurality of bricks 30 wherein a molten glass passage 32 having a substantially circular shape in cross section is formed at the center.

A plate-like refractory brick (a filling material) 36 is disposed at each joint portion 34 between adjacent bricks 30 to close the joint portion 34. The presence of refractory bricks 36 prevent molten glass G from leaking from joint portions 34. The filling material is not limited to the refractory brick 36, and it may be a monolithic refractory.

Monolithic refractories (heat-resistant material) 38 are filled in the space between the thus formed uprising pipe 16 and the leg portion 12A of the vacuum housing 12. The presence of the monolithic refractories 38 prevents heat radiation from the uprising pipe 16. The heat-resistant material is not limited to the monolithic refractories 38, and it may be ordinary refractory bricks.

Since the uprising pipe 16 is constituted by combining in a circumferential direction a plurality of bricks 38 each having a substantially wedge-like shape in cross section, even if thermal expansion is caused in the bricks 30 during a step of raising temperature in, for example, the initiation of operations, the thermal expansion mainly takes place in a radial direction, i.e., toward an inner face and an outer face, of the conduit. Accordingly, a balance in the shape of the conduit formed by combining the plurality of bricks 30 is not lost. In comparison of the uprising pipe 16 in this embodiment with the conventional conduit 1 shown in Figure 9, there is little possibility that the shape of the conduit structure is loosened due to the thermal expansion.

Further, the radiation of heat from the uprising pipe 16 is prohibited by the monolithic refractories 38. Accordingly, the molten glass G passing through the uprising pipe 16 can be at a constant temperature.

Further, an outer peripheral portion of the monolithic refractories 38 is hermetically sealed by the leg portion (corresponding to the casing member) 12A of the vacuum housing 12 whereby air tightness of the uprising pipe 16 as a whole can be increased. Accordingly, the quality of the molten glass G passing through the uprising pipe 16 can be maintained well.

Figure 5 is a transversal cross-sectional view showing an uprising pipe 16A according to the second embodiment wherein the same reference numerals as used for the uprising pipe 16 in the first embodiment shown in Figure 4 designate the same or corresponding parts, and therefore, description of these parts is omitted.

When the uprising pipe 16 shown in Figure 4 is compared with the uprising pipe 16A shown in Figure 5, the uprising pipe 16A is formed by combining bricks 30A having a smaller size, and the thickness of the monolithic refractories 38 is thickened. Namely, the uprising pipe 16A shown in Figure 5 is a conduit in which a heat-insulating function is considered to be important.

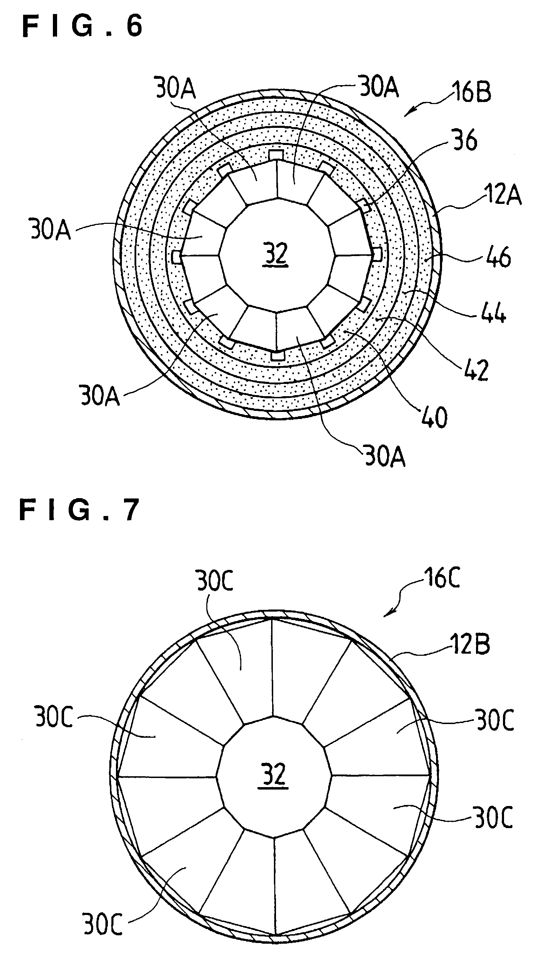

Figure 6 is a transversal cross-sectional view showing an uprising pipe 16B according to the third embodiment wherein the same reference numerals as for the uprising pipe 16A of the second embodiment designate the same or corresponding parts, and accordingly, description of these parts is omitted.

In comparison of the uprising pipe 16A shown in Figure 5 with the uprising pipe 16B shown in Figure 6, the uprising pipe 16B has such a structure that a heat-insulating material is formed of a plurality of brick layers 40, 42, 44 and 46 having a certain thickness, which are divided in a circumferential direction. Namely, the uprising pipe 16B in Figure 6 is a conduit which is strong to a thermal shock.

Figure 7 is a transversal cross-sectional view showing an uprising pipe 16C according to the fourth embodiment wherein the same reference numerals as for the uprising pipe 16 in the first embodiment designate the same or corresponding parts, and description of these parts is omitted.

In comparison of the uprising pipe 16 shown in Figure 4 with the uprising pipe 16C shown in Figure 7, the uprising pipe 16C is constituted by a plurality of bricks 30C each having a larger size, and an outer periphery of the uprising pipe 16C is hermetically sealed with the leg portion 12A of the vacuum housing 12. Namely, the uprising pipe 16C shown in Figure 7 is a conduit in which the strength of the bricks 30C is considered to be important. A heat-insulating material may be filled in spaces formed between the bricks 30C and the leg portion 12A.

Figure 8 is a transversal cross-sectional view showing an uprising pipe 16D according to the fifth embodiment wherein only bricks 30D are shown.

In comparison of the uprising pipe 16 shown in Figure 4 with the uprising pipe 16D shown in Figure 8, the uprising pipe 16D has an outer configuration of rectangular shape. Namely, the outer configuration of the conduit is not limited to a circular form, but it may be a polygonal shape such as quadrilateral, pentagonal or the like.

The bricks 30, 30A or 30C used in the above-mentioned embodiments has a substantially wedge-like shape in cross section. However, the shape of the bricks is not limited to that shape, and the same effect can be obtained by forming the bricks to have a sectorial shape in cross section.

The conduit exemplified in the above-mentioned embodiments has a cross-sectional shape defined by 8 or 12 radially divided sections. However, the present invention is not limited to the above-mentioned shape. For example, the same effect can be obtained even by dividing the cross-sectional area into two portions.

As described above, according to the conduit structure for molten glass according to the present invention, a conduit is formed by combining in a circumferential direction a plurality of bricks each having a substantially sectorial shape or a wedge-like shape in cross section wherein the cross-sectional shape of the conduit is formed of a plurality of radially divided sections of bricks. In the conduit having such structure, even when a thermal expansion is caused in the bricks, the elongation of the bricks due to the thermal expansion takes place in a radial direction. Accordingly, a balance in the conduit structure formed by combining the bricks is not lost. Accordingly, there is little possibility of looseness in the conduit structure of the bricks due to a thermal expansion.

Further, according to the present invention, a filling material is provided at each joint portion in the conduit structure, whereby a leakage of molten glass from the joint portion can be prevented.

Further, a heat-insulating material is disposed at an outer peripheral portion of the conduit to prevent radiation of heat from the conduit. Accordingly, the molten glass passing through the conduit can be at a constant temperature.

Further, an outer peripheral portion of the heat-insulating material is hermetically sealed to improve the hermetic property of the conduit. Accordingly, the quality of molten glass passing through the conduit can be maintained constantly.

In the present invention, since the conduit structure for molten glass having the features as described above is employed in at least one of the uprising pipe and the downfalling pipe of a vacuum degassing apparatus, the vacuum degassing apparatus for molten glass wherein there is little possibility of looseness in the conduit structure can be provided.

## Claims

1. In a conduit structure for molten glass for passing molten glass of high temperature, the conduit structure for molten glass being characterized in that a conduit is formed by combining in a circumferential direction a plurality of bricks each having a substantially sectorial shape or a wedge-like shape in cross section, wherein the cross-sectional shape of the conduit is formed of a plurality of radially divided sections of bricks.

2. The conduit structure for molten glass according to Claim 1, wherein a filling material is provided at each joint portion in the conduit structure composed of the plurality of bricks to close the joint portion.

3. The conduit structure for molten glass according to Claim 1, wherein a heat-insulating material is disposed at an outer peripheral portion of the conduit composed of the plurality of bricks.

4. The conduit structure for molten glass according to Claim 3, wherein the heat-insulating material is hermetically sealed with a casing member.

5. A vacuum degassing apparatus comprising a vacuum housing to be vacuumed, a vacuum degassing vessel received in the vacuum housing, an uprising pipe communicated with the vacuum degassing vessel to introduce molten glass before a vacuum degassing treatment into the vacuum degassing vessel and a downfalling pipe communicated with the vacuum degassing vessel to discharge the molten glass after the degassing treatment from the vacuum degassing vessel, wherein at least one of the uprising pipe and the downfalling pipe has the conduit structure for molten glass described in any one of Claims 1-4.
